# EUROPÄISCHE PATENTSCHRIFT

(11) **EP 3 344 181 B1**
(45) Veröffentlichungstag und Bekanntmachung des Hinweises auf die Patenterteilung: **02.12.2020**
(21) Anmeldenummer: 16770691.0
(22) Anmeldetag: 01.09.2016
(51) Int. Cl.: A61C 7/00, A61C 7/36

(54) **KIEFERORTHOPÄDISCHE BEHANDLUNGSVORRICHTUNG**
ORTHODONTIC TREATMENT DEVICE
DISPOSITIF DE TRAITEMENT ORTHOPÉDIQUE MAXILLAIRE

(30) Priorität: 03.09.2015 DE 102015114726
(43) Veröffentlichungstag der Anmeldung: 11.07.2018
(73) Patentinhaber: Rummel, Volker, 44265 Dortmund (DE)
(72) Erfinder: FURTENHOFER Marc, 45131 Essen (DE); RUMMEL Volker, 44265 Dortmund (DE)
(74) Vertreter: Kalkoff & Partner Patentanwälte PartmbB
(86) Internationale Anmeldenummer: PCT/EP2016/070613
(87) Internationale Veröffentlichungsnummer: WO 2017/037173

(56) Entgegenhaltungen:
- JP-A- 2016 171 960
- US-A- 5 967 784
- US-A1- 2008 233 541
- US-A1- 2013 059 263
- US-A1- 2014 023 983
- US-A1- 2014 272 761
- US-A1- 2014 342 300

## Beschreibung

Die Erfindung betrifft eine kieferorthopädische Behandlungsvorrichtung, mit einer an einem Kieferverlauf ausgerichteten U-förmigen Bissplatte, einer mit der Bissplatte verbundenen Vibrationseinheit zur Erzeugung einer Schwingung der Bissplatte und einer mit der Vibrationseinheit kontaktierten sowie diese steuernde und mit Energie versorgende Basiseinheit.

Kieferorthopädische Behandlungsvorrichtungen der oben genannten Art, insbesondere kieferorthopädische Vibrationsgeräte zur Beschleunigung von kieferorthopädischen Korrekturmaßnahmen, sind aus dem Stand der Technik bekannt. Dabei wird eine so genannte U-förmige Bissplatte, die zwischen oberer und unterer Zahnreihe positioniert wird, über Vibrationsgeneratoren insgesamt oder lokal in Vibration versetzt. Durch die Vibration können, gemäß der aktuellen wissenschaftlichen Ergebnisse, Knochenumbauprozesse, und damit auch die Zahnbewegung während einer kieferorthopädischen Behandlung, beschleunigt werden. Eine gezielte Lockerung der zu regulierenden Zähne ist möglich, so dass die Behandlung zur Korrektur von Fehlstellungen mittels beispielsweise einer Zahnspange effektiver und schneller erfolgen kann.

Die bekannten Bissplatten sind in der Regel mit einer extraoralen Basiseinheit verbunden. Bei den älteren Ausführungen dieser Behandlungsvorrichtungen beinhaltet die Basiseinheit neben einer Stromversorgung auch den Schwingungsgenerator, so dass bei Aktivierung desselben die Vibration auf die gesamte Bissplatte und damit auch auf alle Zähne übertragen wird. In verbesserten Varianten sind ein oder mehrere Schwingungsgeneratoren auf der Bissplatte angeordnet. Die Stromversorgung und die Ansteuerung der Schwingungsgeneratoren erfolgt jedoch auch hier unkomfortabel über eine extraoral zu tragende Basiseinheit.

Aus der US2014023983 ist eine kieferorthopädische U-förmige Bissplatte mit Vibrationseinheit bekannt. In der US2014023983 ist außerdem im Bereich der Kauflächen die Bissplatte mit einer gleichförmigen Riffelung aus parallel angeordneten, rippenförmigen Erhebungen versehen.

Aus der US2013059263 ist eine kieferorthopädische U-förmige Bissplatte bekannt, die selber eine oder mehrere Vibrationseinheiten aufweist.

Der Erfindung liegt daher die Aufgabe zugrunde, eine kompakte und individualisierte kieferorthopädische Behandlungsvorrichtung bereitzustellen, die besonders komfortabel und einfach für den Patienten handhabbar ist.

Die Aufgabe wird erfindungsgemäß durch eine Vorrichtung gemäß Anspruch 1 gelöst. Vorteilhafte Weiterbildungen der Erfindung sind in den abhängigen Ansprüchen angegeben.

Die kieferorthopädische Behandlungsvorrichtung weist eine an einem Kieferverlauf ausgerichtete U-förmige Bissplatte, eine mit der Bissplatte verbundene Vibrationseinheit zur Erzeugung einer Schwingung der Bissplatte und eine mit der Vibrationseinheit kontaktierte sowie diese steuernde und mit Energie versorgende Basiseinheit auf. Erfindungsgemäß sind dabei die Vibrationseinheit und die Basiseinheit flüssigkeitsdicht in die Bissplatte integriert und eine Batterieeinheit der Basiseinheit ist zur kontaktlosen Aufladung ausgebildet.

Die flüssigkeitsdichte Integration der Vibrationseinheit und der Basiseinheit in die Bissplatte, die neben der Batterieeinheit bspw. auch eine Steuereinheit zur Regulierung und Einstellung der Vibration und/oder eine Empfangseinheit für eine Fernbedienung enthalten kann, führt zu einer besonders kompakten und somit einfach zu verwendenden Behandlungsvorrichtung. Die kontaktlose Aufladung erhöht dabei den Bedienkomfort und gewährleistet durch den Verzicht auf Kontaktstellen besonders zuverlässig, dass es nicht zu Schäden aufgrund von eingedrungener Feuchtigkeit kommt.

Die Bissplatte der erfindungsgemäßen Behandlungsvorrichtung dient zur Übertragung der durch die Vibrationseinheit erzeugten Schwingungen auf die im Kiefer verankerten Zähnen. Die Ausgestaltung der Bissplatte ist dabei beliebig wählbar.

So kann diese bspw. einen stabilen Träger aufweisen, an oder in dem die Vibrationseinheit und die Basiseinheit angeordnet sind und der mit einem geeigneten Material umhüllt sind, um die Flüssigkeitsdichtigkeit zu gewährleisten. Dazu kann die Vibrationseinheit und Basiseinheit und ggf. weitere funktionale Komponenten in einen Kunststoff eingebettet und so relativ zueinander in ihrer Position festgelegt sein. Alternativ sind die Vibrationseinheit, die Basiseinheit und ggf. weitere funktionale Komponenten an einer festen Trägerplatte angeordnet. Die Verbindung der Vibrationseinheit, der Basiseinheit sowie möglicher weiterer Funktionskomponenten mit der Trägerplatte kann beliebig erfolgen. So ist eine stoffschlüssige Verbindung je nach Material durch Verkleben, Löten oder Schweißen möglich. Ferner kann eine formschlüssige Verbindung, beispielsweise in Form von Klick- und Rast- und/oder Bajonette-Verbindungselementen, vorgesehen sein. Ist die Trägerplatte mit Ausnehmungen zur Aufnahme der Vibrationseinheit, der Basiseinheit sowie gegebenenfalls weiterer Funktionskomponenten ausgebildet, ist durch geeignete Dimensionierung der Ausnehmungen im Hinblick auf die Größe der aufzunehmenden Vibrationseinheit(en), Basiseinheit und ggf. weiteren Funktionskomponenten oder durch Einfügen von adaptierenden Einsätzen auch eine reibschlüssige Verbindung denkbar.

Der Kunststoffträger mit den darin eingebetteten Funktionskomponenten oder die Trägerplatte mit den daran angeordneten Funktionskomponenten sind flüssigkeitsdicht mit einem geeigneten Material, z. B. Silikon oder einem anderen biokompatiblen Werkstoff umgeben.

Die Bissplatte kann dann je nach Herstellungsverfahren unterschiedliche Materialien oder Materialkombinationen aufweisen. Sofern keine Unverträglichkeit seitens des Patienten besteht, ist sie bevorzugt aus beliebigen biokompatiblen und medizintechnisch zugelassenen Polymeren oder Kombinationen ausgebildet. Dazu zählen neben Polymeren auf Kohlenstoffbasis auch Silikone. Vorzugsweise kommen Thermoplaste, beispielsweise Polymethylmethacrylat (PMMA) oder Polyethylenterephthalat (PETG) zum Einsatz.

Dabei handelt es sich um Kunststoffe, die bei Temperaturen über 100°C aufweichen und leicht in die gewünschte Form gebracht werden können. Das Fließverhalten des Materials im erweichten Zustand ermöglicht zudem die erfindungsgemäße flüssigkeitsdichte Einbettung bzw. Kapselung von Funktionskomponenten, wie die Vibrationseinheit und die Basiseinheit. Zudem erlaubt das thermoplastische Verhalten auch nachträgliche Korrekturen oder Reparaturen an der Bissplatte.

Alternativ kann die Formgebung der Bissplatte und die flüssigkeitsdichte Einbettung oder Kapselung der Funktionskomponenten auch während des Polymerisierungsvorgangs des Polymers erfolgen. Dabei kann auch die Elastizität oder Härte des Polymers durch Zugabe von Zuschlagstoffen beeinflusst werden, wodurch die Bissplatte mit Bereichen unterschiedlicher Härte ausgebildet sein kann. Dadurch ist beispielsweise die Möglichkeit gegeben, gezielt lokal auf Tragekomfort, Passfähigkeit sowie Form- und Bissstabilität Einfluss zu nehmen. Auch im Nachhinein kann die Bissplatte durch das Anpolymerisieren von Polymermaterial individualisierbar/ anpassbar sein.

Auch die Art der erzeugten Vibrationen ist vielfältig. So kann es sich je nach erforderlicher Behandlungsart beispielsweise um oszillierende, zufällige oder auch polarisierte Vibrationen handeln. So werden zur Beschleunigung der Zahnbewegung im Rahmen der Maßnahmen zur Korrektur der Zahnfehlstellungen ggf. zur Steigerung der individuellen Compliance verschiedenen Impulsarten verwendet, wobei sich diese Impulsarten jeweils in Frequenz, Intervall (Dauer und/oder Häufigkeit) und/oder Stärke unterscheiden. Insbesondere bei der nachfolgend noch weiter erläuterten Multiband-/Multibracket-Behandlung ist zudem eine definierte Impulsfolge zur optimalen Reduzierung der Friktion vorgesehen.

Neben dem zahnregulierungsbegleitendenen und diesen vorzugsweise beschleunigenden Einsatz kann die erfindungsgemäße Behandlungsvorrichtung generell zur Beschleunigung von Knochenumbauprozessen im Kieferbereich wie auch zum Lösen von Friktionen bei Multiband/Bracket-Behandlungen oder zur ostheopatischen Behandlung von suturalen Verspannungen im Gesichtsschädel und/oder physiotherapeutischen Behandlung muskulären Verspannungen der Kaumuskulatur herangezogen werden. Da oft das Zähnepressen und/oder -knirschen Auslöser solcher Verspannungen ist, kann mit der erfindungsgemäßen Behandlungsvorrichtung eine Behandlung der Verspannungen vorgenommen werden und/oder zugleich die aus dem Bruxismus resultierenden Zahnschäden vorgebeugt werden. Bei geeigneter Wahl der Vibrationsfrequenz kann die erfindungsgemäße Behandlungsvorrichtung auch nach Traumata, zur Stimulierung eines optimalen Zellwachstums und der damit verbundenen schnelleren Heilung des Gewebes, vorgesehen werden.

Erfindungsgemäß weist die Basiseinheit eine diese und die Vibrationseinheit mit Energie versorgende Batterieeinheit auf, die zur kontaktlosen Aufladung ausgebildet ist. So ist es möglich die Batterieeinheit der erfindungsgemäßen Behandlungsvorrichtung sogar während ihrer Anwendung durcheine extraorale Energieübertragungseinheit kontaktlos aufzuladen. Bevorzugt wird die erfindungsgemäße Behandlungsvorrichtung während ihrer Ruhezeit außerhalb des Mundes mittels einer Ladestation kontaktlos - also ohne elektrische Kontaktierung - aufgeladen.

Die Aufladung kann dabei über eine beliebige Form der drahtlosen Energieübertragung erfolgen. Dazu zählen beispielsweise die induktive Kopplung über einen magnetischen Fluss oder die kapazitive Kopplung über ein elektrisches Feld. Aber auch die Aufladung über elektromagnetische Wellen ist denkbar.

Die erfindungsgemäße kieferorthopädische Behandlungsvorrichtung kann in Kombination oder als Ergänzung zu beliebigen Maßnahmen zur Korrektur von Zahnfehlstellungen eingesetzt werden. So kann die erfindungsgemäße Behandlungsvorrichtung jeweils kurzzeitig vor dem Tragen einer herkömmlichen losen Zahnspange angewendet werden. Eine verbesserte Wirkung zeigt sich jedoch durch das Zusammenwirken des so genannten Multiband-/Multibracket-Verfahrens mit der erfindungsgemäßen kieferorthopädische Behandlungsvorrichtung. Während sich eine lose, also herausnehmbaren Zahnspange ausgehend vom Gaumen auch zum Teil über die Kauflächen der Zähne erstreckt und somit ein gleichzeitiges Tragen der erfindungsgemäßen Behandlungsvorrichtung ausschließt, erfolgt bei der Multiband-/ Multibracket-Behandlung die Korrektur der Zahnfehlstellung durch die Spannung von Drähten, die über fest auf den äußeren, labialen und/oder bukkalen und/oder inneren, lingualen und/oder palatinalen Zahnflächen aufgebrachte Brackets mit den Zähnen in Verbindung stehen. Die okklusalen Kauflächen bleiben also im Wesentlichen frei. Nachdem die erfindungsgemäße Behandlungsvorrichtung sehr kompakt und klein ausgebildet ist, kann diese also parallel zur festsitzenden Multiband-/Multibracket-Zahnspange verwendet werden. Damit kann also zeitgleich eine orthodontische Kraft und die Vibration auf den Zahn/die Zähne übertragen werden, was in einer noch schnelleren Zahnbewegung resultiert.

Die erfindungsgemäße kieferorthopädische Behandlungsvorrichtung ist individuell an das Gebiss des Patienten anpassbar. Unabhängig vom Herstellungsverfahren kann dazu beispielsweise mit Standard-Abdrucklöffeln ein Negativabdruck vom Gebiss des Patienten genommen und mit Gips ausgegossen werden. Auf Basis dieses Zahnmodells kann dann die erfindungsgemäße Behandlungsvorrichtung gefertigt werden. Dabei wird entweder das fertige Thermoplastmaterial durch Erwärmen aufgeweicht und an das Gipsmodell angepasst, wobei die Funktionskomponenten an entsprechenden Stellen in das Material eingearbeitet werden. Dazu kann beispielsweise eine erhitzte, mehrschichtige Kunststofffolie in die die Funktionskomponenten einlaminiert sind, mit einem Tiefziehgerät mittels Vakuum auf das Zahnmodell gezogen werden. Alternativ kann anhand des Modells eine Art Gießwerkzeug hergestellt werden, in dem die erfindungsgemäße Behandlungsvorrichtung nach der Art des Spritzgießens hergestellt wird. Sofern nicht ein erweichter fertiger Thermoplast, sondern die Monomere bzw. Präpolymere verwendet werden, kann in einem derartigen auf Basis des Zahnmodells hergestellten Gießwerkzeug auch die komplette Polymerisierung und Aushärtung der Behandlungsvorrichtung erfolgen.

Nach einer bevorzugten Ausgestaltung der erfindungsgemäßen Behandlungsvorrichtung ist die Bissplatte mit individuellen frontalen und/oder seitlichen Bissimpressionen ausgebildet. Weiter bevorzugt weist die Bissplatte angrenzend an eine zur Anlage an den inzisialen und okklusalen Zahnflächen vorgesehene Oberfläche und/oder Unterfläche zur Anlage an labialen, bukkalen, lingualen und/oder palatinalen Zahnflächen vorgesehene Vorsprünge - ähnlich einem aus dem Boxsport bekannten Mundschutz - auf.

Diese Weiterbildung der Erfindung gewährleistet in besonders zuverlässiger Weise eine ortsfeste Positionierung der Behandlungsvorrichtung innerhalb der Mundhöhle in ihrer vorgesehenen Position. Zudem wird durch die zusätzlichen Kontaktflächen eine besonders gute Übertragung der erzeugten Vibrationen auf die Zähne gewährleistet.

Weiter bevorzugt weist die Basisplatte Vorsprünge, Vertiefungen und/oder Erhebungen auf. Die Vertiefungen und/oder Erhebungen sind vorzugsweise an die Zahnform angepasst und ermöglichen einen weiter verbesserten Halt der Bissplatte sowie eine bessere Schwingungseinkopplung. Denkbar sind beispielsweise kleine Erhebungen und/oder Laschen, die gegebenenfalls auch vor den Vorsprüngen ausgebildet sind, um über die Schneidezähne einen guten Halt für die Bissplatte zu bekommen. Die Vertiefungen und/oder Erhebungen können aber auch bei anatomischen Anomalien ausgebildet sein, um einen besseren Sitz zu ermöglichen. Sie sind dann ausgeprägter ausgebildet und ermöglichen einen zuverlässigen Kontakt auch zu versetzt angeordneten Zähnen.

Die Ausgestaltung der Flächen der Bissplatte mit Bissimpressionen, Vorsprüngen, Vertiefungen, Erhebungen und dgl. kann grundsätzlich in beliebiger Weise erfolgen, bspw. direkt bei der Formgebung der Bissplatte unter Verwendung eines Kunststoffs. Alternativ besteht die Möglichkeit, die Flächen, sowie Bissimpressionen, Vorsprünge, Vertiefungen, Erhebungen und dergleichen an einer Umhüllung der Bissplatte, bspw. einem Silikonmantel, auszubilden, wodurch sich standardisierte Bissplatten in einfacher Weise individualisieren lassen.

Mit einer Ausbildung der oben genannten Strukturen im Silikonmantel ist eine Berücksichtigung der individuelle Gebissparameter bei der Herstellung der Bissplatte oder aber auch im Nachhinein noch möglich. So kann die Bissplatte auch im Verlauf der Behandlung jeweils an Veränderungen der Zähne angepasst werden.

Im Rahmen eines standardisierten Herstellungsverfahrens ist nach einer Weiterbildung der Erfindung vorgesehen, die Bissplatte der Behandlungsvorrichtung an anomaliebe- dingte anatomische Besonderheiten angepasst auszubilden. So kann bspw. zur Berücksichtigung eines offenen Bisses, bei dem bei geschlossenen Zahnreihen eine Lücke zwischen Zähnen von Ober- und Unterkiefer verbleibt, die Bissplatte zur Auffüllung in entsprechenden Bereichen dicker ausgebildet sein. Bei einem frontal offenen Biss kann die Bissplatte also im vorderen Bereich, in der Regel im Bereich der Schneide- und gegebenenfalls auch der Eckzähne, dicker ausgebildet sein. Bei einem seitlich offenen Biss kann die Bissplatte im seitlichen Bereich, also im Bereich der Backen und gegebenenfalls der Eckzähne verdickt sein.

Zudem ist, sofern als notwendig erachtet, neben der Herstellung nach einem standardisierten Verfahren auch die Möglichkeit gegeben, anomaliebedingte anatomische Besonderheiten über eine individualisierte Herstellung zu berücksichtigen. So können außer- ordentliche Anomalien, wie z. B. verlagerte Eckzähne, durch herausragende Bissplattenabschnitte berücksichtigt werden, wobei auch in diese Erhebungen Vibrationselemente integriert sein können.

Die Vibrationseinheit kann dabei ein einziges, zentrales Vibrationselement aufweisen, aber auch zwei oder mehrere Vibrationselemente besitzen, die miteinander gekoppelt sein können oder individuell über die Basiseinheit ansteuerbar sind.

Gemäß einer Weiterentwicklung der Erfindung ist vorgesehen, dass sich die Vibrationseinheit im Wesentlichen über die gesamte Bissplatte erstreckt, wobei jedoch zugleich die flüssigkeitsdichte Integration von Vibrationseinheit und Basiseinheit in die Bissplatte gewährleistet ist. Dabei sind die Lage und/oder die Position der Basiseinheit sowie der Vibrationseinheit individuell an die individuellen anatomischen Bedingungen anpass- bar. Dadurch ist gewährleistet, dass die Schwingungen auf die gesamte Bissplatte, insbesondere aber auf die zu behandelnden Zähne und/oder Zahnabschnitte übertragen werden.

Nach einer bevorzugten Ausgestaltung der Erfindung ist vorgesehen, dass die Vibrationseinheit mindestens ein, vorzugsweise mehrere im Abstand zueinander angeordnete Vibrationselemente aufweist. So kann vorzugsweise bei mehreren Vibrationselementen eine gleichmäßige Schwingung der Bissplatte erreicht werden. Dazu können die Vibrationselemente gleichmäßig beabstandet sein. Es ist aber auch denkbar, dass die Vibrationselemente derart angeordnet sind, dass unterschiedliche Bereiche der Bissplatte unterschiedlich stark schwingen. Auch ist es möglich, dass die mehreren Vibrationselemente zu unterschiedlichen Zeiten und/oder mit unterschiedlicher Stärke oder Frequenz schwingen.

Weiter bevorzugt ist, dass mindestens ein Vibrationselement angrenzend an die Oberfläche und/oder die Unterfläche und/oder zumindest abschnittsweise in den Vorsprüngen und/oder Erhebungen angeordnet ist. Durch diese Anordnung kann vorzugsweise eine sehr gute Schwingungseinkopplung, insbesondere auch unter Berücksichtigung der individuellen Erfordernisse, erreicht werden.

Gemäß einer Weiterentwicklung der Erfindung ist vorgesehen, dass die der Biss- bzw. Kaufläche der oberen Zahnseite zugewandten Oberseite und/oder die der Biss- bzw. Kaufläche der unteren Zahnseite zugewandten Unterseite der Bissplatte von dieser vorstehende Noppen aufweist. Diese autoadaptiven Noppen sorgen für eine individuelle Adaption der Bissplatte an das Gebiss. Vorzugsweise ermöglichen die Noppen auch eine durchgehende Benutzung der erfindungsgemäßen Behandlungsvorrichtung in verschiedenen Behandlungsstadien ohne erneute Anpassung. Gleichzeitig wird durch die Noppen eine größere Kontaktfläche zwischen Zahn und Behandlungsvorrichtung erreicht. Das führt zu einer verbesserten Übertragung der Vibration auf die Zähne und damit vorzugsweise zu einer erheblichen Effizienzsteigerung.

Die Noppen können in ihrer Form beliebig ausgestaltet sein. So sind Noppen mit einem runden aber auch einem eckigen Querschnitt denkbar. Auch die Länge der Noppen kann variabel gewählt werden. Vorzugsweise haben die Noppen eine Länge von 0,5 mm bis 5 mm, weiter vorzugsweise von 1 mm bis 3 mm. Der Durchmesser der Noppen liegt vorzugsweise im Bereich von 0,25 mm bis 3 mm. Die Oberfläche der Noppen kann glatt oder strukturiert sein. Das freie Ende einer jeden Noppe kann abgerundet, flach oder faserig in Form eines Pinsels ausgebildet sein.

Nach einer bevorzugten Ausgestaltung der Erfindung weist die Basiseinheit Steuerungsmittel zur Aktivierung und/oder Festlegung der Art, Dauer, Frequenz und/oder Intensität der von der Vibrationseinheit bzw. den Vibrationselementen erzeugten Schwingung auf.

Die Steuermittel können mittels Knopfdruck an der Behandlungsvorrichtung oder fernsteuerbare induktive Sensoren bedient werden. Bevorzugt aber weisen die Steuerungsmittel eine Empfangseinheit auf, die zur Kommunikation mit einem externen Sender ausgebildet ist.

Eine Empfangseinheit ermöglicht die Steuerung per separater Fernbedienung. Bei entsprechender Ausgestaltung ist auch die Steuerung mittels einer Smartphone-App denkbar. Über die Empfangseinheit lassen sich auch weiter Daten, wie bspw. der Ladestand und die Nutzungsdauer erfassen. Ferner können individuell auf den Patienten abgestimmte Behandlungsprofile mit gegebenenfalls definierten Impulsarten betreffend Art, Dauer, Frequenz und/oder Intensität der Vibrationen und/oder Impulsmuster, die neben der Impulsart auch Impulsintervalle mit identischen oder unterschiedlichen Impulsarten umfassen können, programmiert werden. Fehlbedienungen werden so vermieden.

Die Basiseinheit weist hierzu eine entsprechende Ausgestaltung, beispielsweise einen Speicherchip, bevorzugt einen Funk-Speicherchip, bspw. einen WLAN-Speicherchip, und/oder einen Mikroprozessor auf. Der Betrieb erfolgt über die Batterieeinheit.

Die Basiseinheit sowie die Vibrationsmotoren und /oder ggf. weitere Funktionskomponenten können auch in einem Vorsprung oder einer Ausnehmung der erfindungsgemäßen Behandlungsvorrichtung angeordnet sein. An diesen Vorsprung oder in diese Ausnehmung kann ein Griff angekoppelt werden, der die Entnahme sowie das Einsetzen komfortabler gestaltet. Der Vorsprung kann dabei auch derart ausgebildet sein, dass er für sich genommen den Griff bildet.

Nach einer bevorzugten Ausgestaltung der Erfindung ist die Basiseinheit jedoch derart in die Bissplatte integriert, dass die dem Gaumen und der Zunge zugewandten Flächen der Bissplatte und/oder die den Lippen bzw. den Wangen zugewandten Flächen der Bissplatte zumindest im Bereich der Basiseinheit eben und im Wesentlichen ohne Vorsprünge oder Ausnehmungen ausgebildet sind. Gemäß dieser Weiterbildung der Erfindung weisen diese Flächen einen gleichmäßigen U-förmigen Verlauf mit einer durchgehenden Krümmung auf, von der keinerlei Bauteile in Richtung der Lippen bzw. des Gaumens vorstehen. Die Basiseinheit und deren Bestandeile sind dabei vorzugsweise derart in die Ummantelung integriert, dass sie nicht oder kaum wahrnehmbar aus der dem Gaumen und der Zunge zugewandten Flächen der Bissplatte und/oder die den Lippen bzw. den Wangen zugewandten Flächen der Bissplatte hervorsteht. Diese Ausgestaltung führt zu einem angenehmen Tragekomfort. Zudem bietet eine ebene und glatte Ummantelung weniger Angriffspotential für Reibungsverschleiß.

Die Vibrationseinheit kann ein beliebiges Mittel zur Vibrationserzeugung umfassen. So können die Vibrationselemente durch elektromagnetische Motoren oder Piezzoelementen gebildet sein. Es sind aber auch mechanische Aktuatoren denkbar, wie zum Beispiel Unwuchtmotoren. Bevorzugt werden Mini- oder Mikro-Vibrationsmotoren, weiter vorzugsweise sogenannte Coin- oder Disk-Vibrationsmotoren oder Ultraschallerzeuger eingesetzt. Diese Art der Vibrationselemente ist besonders klein und erfordert demnach nur einen geringen Bauraum. Damit können diese einfach ganz oder zumindest partiell auch in die Vorsprünge und/oder Erhebungen der erfindungsgemäßen kieferorthopädischen Behandlungsvorrichtung eingebettet werden.

Grundsätzlich ist die Frequenz der durch die Vibrationselemente erzeugten Schwingungen beliebig im Rahmen des für die jeweilige Behandlung erforderlichen Frequenzbereichs wählbar. Nach einer bevorzugten Ausgestaltung der Erfindung werden die Zähne durch die Vibrationselemente bzw. die Vibrationseinheit mit Vibrationen in einem Frequenzbereich zwischen 0 Hz und 1000 Hz, bevorzugt zwischen 0 Hz und 300 Hz und weiter bevorzugt zwischen 0 Hz und 100 Hz beaufschlagt. Die mit den Schwingungen auf die Zähne ausgeübte Kraft liegt im Bereich von 0,1-10 Newton. Je nach erforderlicher Behandlung ist auch ein Betrieb im Ultraschallbereich denkbar.

Gemäß einer Weiterbildung der Erfindung ist vorgesehen, dass die erfindungsgemäße kieferorthopädische Behandlungsvorrichtung selbstreinigend ausgebildet ist. Dazu weist die kieferorthopädische Behandlungsvorrichtung einen Selbstreinigungsmodus auf. Dieser Selbstreinigungsmodus ist durch die Steuermittel aktivierbar, wobei dann die Vibrationseinheit der Behandlungsvorrichtung eine definierte Schwingung erzeugt, die zur Reinigung der Vorrichtung geeignet ist. Zur Reinigung kann damit die Behandlungsvorrichtung während der extraoralen Lagerung in einem mit einer Reinigungslösung gefüllten Behältnis durch die mit der Bissplatte verbundenen Vibrationseinheit einer reinigenden und/oder desinfizierenden Schwingung (z. B. Ultraschall) ausgesetzt werden. Bei entsprechender Anordnung von Ladestation und Reinigungs-/Lagerungsbehältnis kann die Reinigung parallel zum Ladevorgang erfolgen.

Ausführungsbeispiele der Erfindung werden nachstehend mit Bezug auf die Zeichnungen erläutert. In den Zeichnungen zeigt:
- Fig. 1: in einer skizzierten Darstellung eine perspektivische Ansicht einer ersten Ausführungsform einer kieferorthopädischen Behandlungsvorrichtung;
- Fig. 2: in einer skizzierten Darstellung eine Draufsicht auf eine zweite Ausführungsform einer kieferorthopädischen Behandlungsvorrichtung;
- Fig. 3: in einer skizzierten Darstellung eine Ansicht eines Schnitts entlang der Schnittlinie A-A von Fig. 2;
- Fig. 4: in einer skizzierten Darstellung eine Ansicht eines Schnitts entlang der Schnittlinie B-B von Fig. 2;
- Fig. 5: in einer skizzierten Darstellung eine Seitenansicht der Behandlungsvorrichtung von Fig. 2;
- Fig. 6: in einer skizzierten Darstellung eine Draufsicht auf eine dritte Ausführungsform der Behandlungsvorrichtung;
- Fig. 7: in einer skizzierten Darstellung eine Seitenansicht der Behandlungsvorrichtung von Fig. 6;
- Fig. 8: in einer skizzierten Darstellung eine Draufsicht auf eine Trägerplatte einer vierten Ausführungsform der Behandlungsvorrichtung;
- Fig. 9: in einer skizzierten Darstellung eine Ansicht eines Schnitts entlang der Schnittlinie C-C von Fig. 8;
- Fig. 10: in einer skizzierten Darstellung eine Schnittansicht auf eine fünfte Ausführungsform der Behandlungsvorrichtung;
- Fig. 11: in einer skizzierten Darstellung der Behandlungsvorrichtung von Fig. 10 beim Zubiss;
- Fig. 12: einer skizzierten Darstellung der Behandlungsvorrichtung von Fig. 10 in einer Seitenansicht beim Zubiss;
- Fig. 13: in einer skizzierten Darstellung eine Schnittansicht auf eine sechste Ausführungsform der Behandlungsvorrichtung;

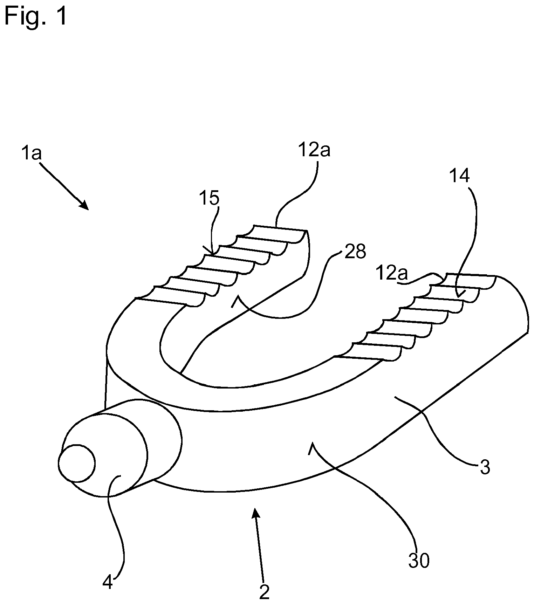

In Fig. 1 ist eine Ausführungsform einer kieferorthopädischen Behandlungsvorrichtung 1a dargestellt. Diese weist eine U-förmige Bissplatte 2 mit einer flüssigkeitsdichten Ummantelung 3 auf. Die kieferorthopädische Behandlungsvorrichtung 1a ist mit einem Vorsprung 4 ausgebildet, in dem eine Basiseinheit 6 - hier nicht abgebildet - mit einer hier ebenfalls nicht dargestellten kontaktlos aufladbaren Batterieeinheit 7 angeordnet ist. Der Vorsprung 4 kann zudem auch als Hilfsmittel zur vereinfachten Entnahme oder das Einsetzen oder als Adapter für einen entsprechenden Griff verwendet werden. Im Bereich der okklusalen Kauflächen 12a ist die Bissplatte 2 mit Ausnehmungen 14 und Erhebungen 15 versehen, die im Zusammenwirken mit den zu behandelnden Zähnen einem Verrutschen wirksam vorbeugen.

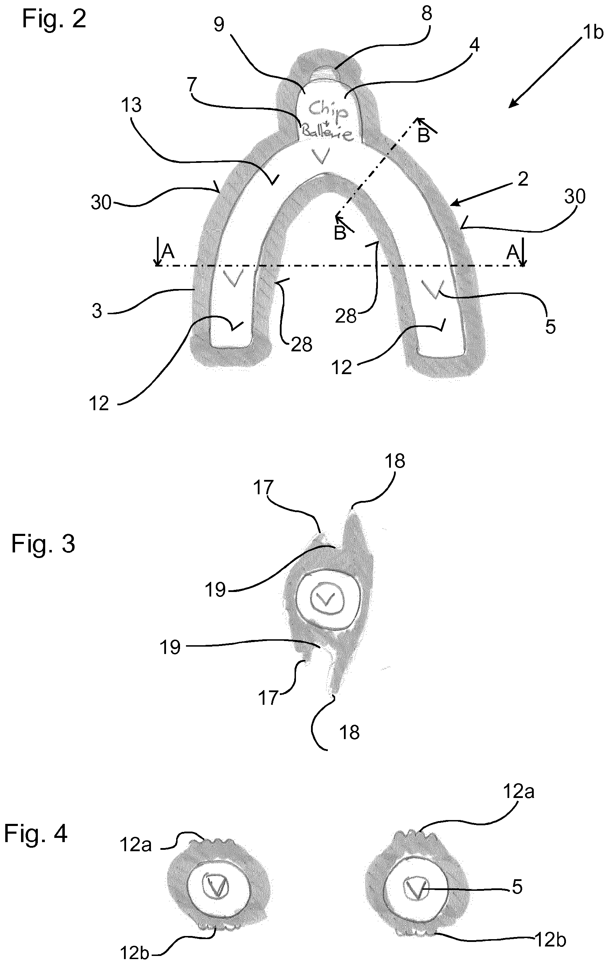

In den Fig. 2 bis Fig. 5 ist eine zweite Ausführungsform einer Behandlungsvorrichtung 1b dargestellt, deren Bissplatte 2 mit einer Silikonschicht 3 flüssigkeitsdicht ummantelt ist. Zur Aufnahme der Basiseinheit 6 mit einer Batterie 7 und einem als Chip 9 ausgebildeten Steuerungsmittel ist die Bissplatte 2 im labialen, frontseitigen Bereich mit einem Vorsprung 4 ausgebildet, an dessen freiem Ende eine Induktions-Ladespule 8 zur kontaktlosen Aufladung der Batterie 7 angeordnet ist. Ferner sind im Bereich der frontalen Kauflächen 13a, 13b und den seitlichen Kauflächen 12a, 12b der Bissplatte Vibrationseinheiten 5 angeordnet, die gemeinsam eine Vibrationseinheit der Behandlungsvorrichtung 1a bis 1d bilden. Die Vibrationselemente 5 sind dabei in das Basismaterial der mit einer Ummantelung 3 aus Silikon umgebenen Bissplatte 2 eingebettet.

Weiter weist die Ummantelung 3 eine individuell an das Gebiss angepasste Bissrille 19 mit zur Anlage an labialen, lingualen und/oder palatinalen Zahnflächen vorgesehenen Vorsprüngen 17, 18 auf. Zur Anlage an die bukkalen Zahnflächen können zudem hier nicht dargestellte schildförmige Vorsprünge, analog zu den frontalen Schilden, vorgesehen sein.

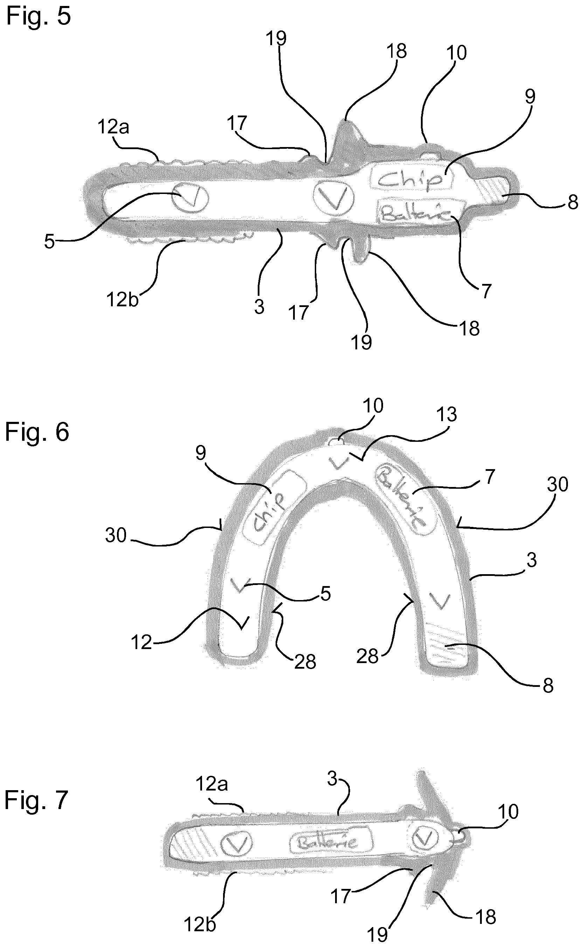

In den Fig. 6 bis Fig.7 ist eine dritte Ausführungsform einer Behandlungsvorrichtung 1c dargestellt. Dabei handelt es sich um eine schlanke Ausführungsvariante, die sich durch einen besonderen angenehmen Tragekomfort auszeichnet. Die Basiseinheit 6 bzw. die einzelnen Komponenten der Basiseinheit 6 sind derart an der Bissplatte 2 angeordnet, dass sie nicht oder kaum wahrnehmbar aus der dem Gaumen und der Zunge zugewand- ten Flächen der Bissplatte 2 und/oder die den Lippen bzw. den Wangen zugewandten Flächen der Bissplatte 2 hervorstehen. So sind die Batterie 7, die Ladespule 8 und der Chip 9 wie die Vibrationsgeneratoren 5 in das Basismaterial der Bissplatte 2 eingebettet. Lediglich der Ein-/Ausschalter 10 steht zur sicheren und optimalen Bedienbarkeit aus der den Lippen zugewandten Fläche der Bissplatte geringfügig hervor. Bei einer ferngesteuerten Aktivierung einer hier nicht dargestellten Ausführungsform der kieferorthopädischen Behandlungsvorrichtung 1c über die Steuerungsmittel 9 kann durch Verzicht auf den Ein-/Ausschalter 10 auch der damit verbundene Vorsprung 10a beseitigt werden.

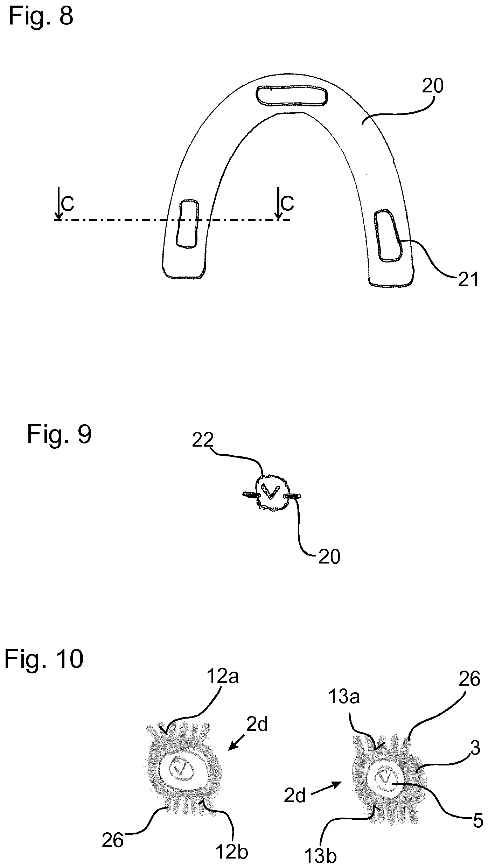

In der in Fig. 8 und Fig. 9 dargestellten vierten Ausführungsform der kieferorthopädischen Behandlungsvorrichtung 1d sind die Vibrationselemente 5 nicht in eine Basismatrix eingebettet. Stattdessen ist eine Trägerplatte 20 mit Ausnehmungen 21 versehen, in die die Vibrationseinheiten 5 derart eingesetzt sind, dass sie ein- oder beidseitig aus der Trägerplatte 20 hervorstehen. Zum Schutz der Vibrationseinheiten 5 sind diese nach Anordnung in den Ausnehmungen 21 der Trägerplatte 20 mit Schutzkappen 22 versehen.

Die Verbindung der Vibrationselemente 5 mit der Trägerplatte 20 erfolgt stoffschlüssig In nicht dargestellten Ausführungsformen der kieferorthopädischen Behandlungsvorrichtung 1d werden zur formschlüssigen Verbindung beispielsweise Klick- und Rast-Verbindungselemente genutzt oder eine reibschlüssige Verbindung durch geeignete Dimensionierung der Größen von Vibrationselement, Ausnehmungen 21 und ggf. Schutzkappen 22 bzw. der gekapselten Vibrationselemente realisiert. Weitere nicht dargestellte Ausführungsformen der kieferorthopädischen Behandlungsvorrichtung 1d verwenden Kombinationen der oben genannten Verbindungsarten.

Nach der Anordnung der Vibrationselemente 5, der Basiseinheit 6 und ggf. des Ein-/ Aus-Schalters 10 und/oder einer Ladespule 8 wird die bestückte Trägerplatte 20 mit allen Komponenten flüssigkeitsdicht mit einer Silikonschicht 3 ummantelt.

In einer fünften Ausführungsform, dargestellt in Fig. 10 bis Fig. 12, ist die Ummantelung 3 der Bissplatte 2 an Ihren den Kauflächen zugewandten Oberflächen 12a, 12b, 13a, 13b mit Noppen 26 ausgebildet. Aufgrund der Elastizität der Noppen 26 werden diese beim Zubiss von den Zahnkronen 30 derart ausgerichtet, dass sie in allen Abschnitten der Zahnkronen 30 - auch bei vergleichsweise kürzeren oder im Durchbruch befindlichen Zahnkronen 32 - eine optimale Anlage an die Zahnoberfläche gewährleisten. Auf diese Weise wird eine gute Schwingungsübertragung sowie ein guter Halt der Behandlungsvorrichtung erreicht.

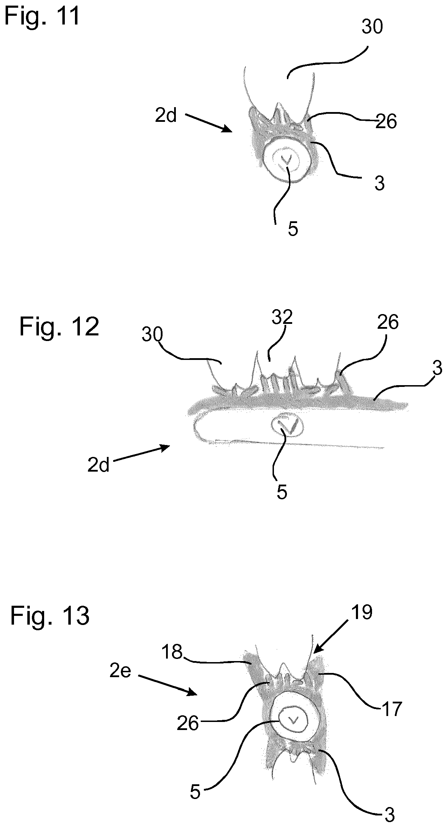

In einer sechsten Ausführungsform der Behandlungsvorrichtung (Fig. 13) weist die Ummantelung 3 eine individuell an das Gebiss angepasste Bissrille 19 auf. Im Bereich der Bissrille 19 ist die Ummantelung 3 der Bissplatte 2 mit Noppen 26 ausgebildet, die sich beim Aufbiss exakt an alle Bereiche der reliefartigen Zahnkronenoberflächen anlegen. Die zur Anlage an labialen, lingualen und/oder palatinalen Zahnflächen vorgesehenen Vorsprüngen 17, 18 sichern die Behandlungsvorrichtung 1e gegen unerwünschtes Verrutschen in der vorgesehenen Position und übertragen die Schwingungen in gezielter Weise auch auf die labialen, lingualen und/oder palatinalen Zahnflächen.

## Patentansprüche

1. Kieferorthopädische Behandlungsvorrichtung mit
- einer an einem Kieferverlauf ausgerichteten U-förmigen Bissplatte (2),
- einer mit der Bissplatte (2) verbundenen Vibrationseinheit (5) zur Erzeugung einer Schwingung der Bissplatte und
- einer mit der Vibrationseinheit (5) kontaktierten sowie diese steuernden und mit Energie versorgenden Basiseinheit (6),
wobei
- die Vibrationseinheit (5) und die Basiseinheit (6) flüssigkeitsdicht in die Bissplatte integriert sind und eine Batterieeinheit (7) der Basiseinheit (6) zur kontaktlosen Aufladung ausgebildet ist und
- die Bissplatte (2) angrenzend an eine zur Anlage an den inzisialen und okklusalen Zahnflächen vorgesehene Oberfläche 12a, 13a) und/oder Unterfläche (12b, 13b) zur Anlage an labialen, bukkalen, lingualen und/oder palatinalen Zahnflächen vorgesehene Vorsprünge (15, 17, 18) aufweist,
**dadurch gekennzeichnet, dass**
die Bissplatte (2) im Bereich der okklusalen Kauflächen (12a, 12b) mit an die Zahnform angepassten Ausnehmungen (14) und Erhebungen (15) versehen ist, und die Vibrationseinheit (5) angrenzend an die Oberfläche (12a, 13a) und/oder die Unterfläche (12b, 13b) und/oder zumindest abschnittsweise in den Erhebungen (15) der Bissplatte (2) angeordnet ist.

2. Kieferorthopädische Behandlungsvorrichtung nach Anspruch 1, **dadurch gekennzeichnet, dass** sich die Vibrationseinheit (5) im Wesentlichen über die gesamte Bissplatte (2) erstreckt.

3. Kieferorthopädische Behandlungsvorrichtung nach Anspruch 1 oder 2, **dadurch gekennzeichnet, dass** die Bissplatte (2) Vorsprünge (4), Vertiefungen (14, 19) und/oder Erhebungen aufweist (15, 17, 18).

4. Kieferorthopädische Behandlungsvorrichtung nach einem oder mehreren der vorhergehenden Ansprüche, **dadurch gekennzeichnet, dass** die Vibrationseinheit mindestens ein, vorzugsweise mehrere im Abstand zueinander angeordnete Vibrationselemente (5) aufweist.

5. Kieferorthopädische Behandlungsvorrichtung nach einem oder mehreren der vorhergehenden Ansprüche, **dadurch gekennzeichnet, dass** das Vibrationselement (5) zumindest abschnittsweise in den Vorsprüngen (4) und/oder Erhebungen (17, 18) der Bissplatte (2) angeordnet ist.

6. Kieferorthopädische Behandlungsvorrichtung nach einem oder mehreren der vorhergehenden Ansprüche, **dadurch gekennzeichnet, dass** die Oberfläche und/oder Unterfläche der Bissplatte (2) von dieser vorstehende Noppen (26) aufweist.

7. Kieferorthopädische Behandlungsvorrichtung nach einem oder mehreren der vorhergehenden Ansprüche, **dadurch gekennzeichnet, dass** die Basiseinheit (6) Steuerungsmittel (9) zur Festlegung der Schwingungsdauer, Schwingungsart und/oder Schwingungsintensität aufweist.

8. Kieferorthopädische Behandlungsvorrichtung nach Anspruch 7, **dadurch gekennzeichnet, dass** die Steuerungsmittel (9) eine Empfangseinheit aufweisen, die zur Kommunikation mit einem externen Sender ausgebildet ist.

9. Kieferorthopädische Behandlungsvorrichtung nach einem oder mehreren der vorhergehenden Ansprüche, **dadurch gekennzeichnet, dass** die Basiseinheit derart in die Bissplatte integriert, dass die dem Gaumen und der Zunge zugewandten Flächen (28) der Bissplatte (2) und/oder die den Lippen bzw. den Wangen zugewandten Flächen (30) der Bissplatte (2) zumindest im Bereich der Basiseinheit (6) eben und im Wesentlichen ohne Vorsprünge oder Ausnehmungen ausgebildet sind.

10. Kieferorthopädische Behandlungsvorrichtung nach einem oder mehreren der vorhergehenden Ansprüche, **dadurch gekennzeichnet, dass** die Vibrationseinheit eine Schwingung mit einer Frequenz kleiner oder gleich 1000 Hz, bevorzugt kleiner oder gleich 300 Hz, besonders bevorzugt kleiner oder gleich 100 Hz erzeugt.

11. Kieferorthopädische Behandlungsvorrichtung nach einem oder mehreren der vorhergehenden Ansprüche, **dadurch gekennzeichnet, dass** die Vibrationselemente (5) durch Vibrationsmotoren und/oder Ultraschallerzeuger gebildet sind.

## Claims

1. An orthodontic treatment device having:
- a U-shaped bite plate (2) which follows a jaw contour,
- a vibration unit (5) connected to the bite plate (2) to produce an oscillation of the bite plate, and
- a main unit (6) which is in contact with the vibration unit (5) and controls the same and provides it with power,
wherein
- the vibration unit (5) and the main unit (6) are integrated liquid-tight in the bite plate, and a battery unit (7) of the main unit (6) is designed to charge wirelessly and
- the bite plate (2) has projections (15, 17, 18) adjacent to a top surface (12a, 13a) provided for placement on the incisal and occlusal tooth surfaces and/or bottom surface (12b, 13b), for placement on labial, buccal, lingual and/or palatal tooth surfaces,
**characterized in that**
the bite plate (2) in the region of the occlusal tooth surfaces (12a, 12b) is provided with recesses (14) and elevations (15) adapted to the tooth shape and the vibration unit is arranged adjacent to the top surface (12a, 13a) and/or bottom surface (12b, 13b) and/or at least sectionally within the elevations (15) of the bite plate (2).

2. The orthodontic treatment device according to claim 1, **characterized in that** the vibration unit (5) extends substantially over the entire bite plate (2).

3. The orthodontic treatment device according to claim 1 or 2, **characterized in that** the bite plate (2) has projections (4), recesses (14, 19) and/or elevations (15, 17, 18).

4. The orthodontic treatment device according to one or more of the preceding claims, **characterized in that** the vibration unit has at least one, preferably a plurality of vibration elements (5) arranged at a distance from each other.

5. The orthodontic treatment device according to one or more of the preceding claims, **characterized in that** the vibration element (5) is arranged at least sectionally within the projections (4) and/or elevations (15, 17, 18) of the bite plate (2).

6. The orthodontic treatment device according to one or more of the preceding claims, **characterized in that** the top surface and/or bottom surface of the bite plate (2) has nubs (26) projecting therefrom.

7. The orthodontic treatment device according to one or more of the preceding claims, **characterized in that** the main unit (6) has control means (9) for establishing the duration, type, and/or intensity of the oscillation.

8. The orthodontic treatment device according to claim 7, **characterized in that** the control means (9) have a receiving unit that is designed to communicate with an external transmitter.

9. The orthodontic treatment device according to one or more of the preceding claims, **characterized in that** the main unit is integrated in the bite plate so that the surfaces (28) of the bite plate (2) facing the gums and the tongue, and/or the surfaces (30) of the bite plate (2) facing the lips, or respectively the cheeks are designed flat, at least in the region of the main unit (6), and substantially without projections or recesses.

10. The orthodontic treatment device according to one or more of the preceding claims, **characterized in that** the vibration unit generates oscillation at a frequency less than or equal to 1000 Hz, preferably less than or equal to 300 Hz, particularly preferably less than or equal to 100 Hz.

11. The orthodontic treatment device according to one or more of the preceding claims, **characterized in that** the vibration elements (5) are formed by vibration motors and/or ultrasonic generators.

## Revendications

1. Dispositif de traitement orthopédique maxillaire comprenant :
- une plaque à mordre (2) en forme de U, orientée selon l'évolution de la mâchoire,
- une unité vibratoire (5) reliée à la plaque à mordre (2) pour la production d'une oscillation de la plaque à mordre, et
- une unité de base (6) en contact avec l'unité vibratoire (5) et commandant celle-ci tout en alimentant celle-ci en énergie,
dans lequel
- l'unité vibratoire (5) et l'unité de base (6) sont intégrées dans la plaque à mordre de manière étanche aux fluides et une unité de batterie (7) de l'unité de base (6) est conçue pour un chargement sans contact, et
- la plaque à mordre (2) présente des saillies (15, 17, 18) prévues pour s'appliquer sur des surfaces de dent labiales, buccales, linguales et/ou palatines, à côté d'une surface supérieure (12a, 13a) et/ou d'une surface inférieure (12b, 13b) prévue pour s'appliquer sur les surfaces de dent incisives et occlusales,
**caractérisé en ce que**
- la plaque à mordre (2) est pourvue de cavités (14) et de surélévations (15) adaptées à la forme des dents dans la région des surfaces de mastication occlusales (12a, 12b), et l'unité vibratoire (5) est disposée à côté de la surface supérieure (12a, 13a) et/ou de la surface inférieure (12b, 13b) et/ou au moins partiellement dans les surélévations (15) de la plaque à mordre (2).

2. Dispositif de traitement orthopédique maxillaire selon la revendication 1, **caractérisé en ce que** l'unité vibratoire (5) s'étend quasiment sur toute la plaque à mordre (2).

3. Dispositif de traitement orthopédique maxillaire selon la revendication 1 ou 2, **caractérisé en ce que** la plaque à mordre (2) présente des saillies (4), des cavités (14, 19) et/ou des surélévations (15, 17, 18).

4. Dispositif de traitement orthopédique maxillaire selon l'une ou plusieurs des revendications précédentes, **caractérisé en ce que** l'unité vibratoire présente au moins un et de préférence plusieurs éléments vibratoires (5) espacés les uns des autres.

5. Dispositif de traitement orthopédique maxillaire selon l'une ou plusieurs des revendications précédentes, **caractérisé en ce que** l'élément vibratoire (5) est au moins partiellement disposé dans les saillies (4) et/ou les surélévations (17, 18) de la plaque à mordre (2).

6. Dispositif de traitement orthopédique maxillaire selon l'une ou plusieurs des revendications précédentes, **caractérisé en ce que** la surface supérieure et/ou la surface inférieure de la plaque à mordre (2) présente des bossages (26) faisant saillie sur celle(s)-ci.

7. Dispositif de traitement orthopédique maxillaire selon l'une ou plusieurs des revendications précédentes, **caractérisé en ce que** l'unité de base (6) présente des moyens de commande (9) destinés à définir la durée d'oscillation, le type d'oscillation et/ou l'intensité d'oscillation.

8. Dispositif de traitement orthopédique maxillaire selon la revendication 7, **caractérisé en ce que** les moyens de commande (9) présentent une unité de réception, laquelle est conçue pour communiquer avec un émetteur externe.

9. Dispositif de traitement orthopédique maxillaire selon l'une ou plusieurs des revendications précédentes, **caractérisé en ce que** l'unité de base est intégrée de telle façon dans la plaque à mordre, que les surfaces (28) de la plaque à mordre (2) tournées vers le palais et la langue et/ou les surfaces (30) de la plaque à mordre (2) tournées vers les lèvres ou les joues sont conçues planes et quasiment sans saillies ou cavités, du moins dans la région de l'unité de base (6).

10. Dispositif de traitement orthopédique maxillaire selon l'une ou plusieurs des revendications précédentes, **caractérisé en ce que** l'unité vibratoire produit une oscillation avec une fréquence inférieure ou égale à 1000 Hz, de préférence inférieure ou égale à 300 Hz, de façon particulièrement préférentielle inférieure ou égale à 100 Hz.

11. Dispositif de traitement orthopédique maxillaire selon l'une ou plusieurs des revendications précédentes, **caractérisé en ce que** les éléments vibratoires (5) sont formés par des moteurs à vibration et/ou des générateurs d'ultrasons.
